**Europäisches Patentamt**

**European Patent Office**

**Office européen des brevets**

(11) Veröffentlichungsnummer: **0 030 629**
**B1**

(12) **EUROPÄISCHE PATENTSCHRIFT**

(45) Veröffentlichungstag der Patentschrift:
13.02.85

(51) Int. Cl.⁴: **H 04 L 1/14, H 03 M 7/30,**
**H 03 M 9/00**

(21) Anmeldenummer: 80107063.2

(22) Anmeldetag: 14.11.80

(54) Einrichtung zum Speisen einer Datensenke mit Datenwörtern unter Verwendung eines Serien-Parallel-Umsetzers.

(30) Priorität: 12.12.79 DE 2949972

(43) Veröffentlichungstag der Anmeldung:
24.06.81 Patentblatt 81/25

(45) Bekanntmachung des Hinweises auf die Patenterteilung:
13.02.85 Patentblatt 85/7

(84) Benannte Vertragsstaaten:
AT CH LI NL

(56) Entgegenhaltungen:
DE - A - 1 549 519
DE - A - 2 432 400
DE - A - 2 547 178
DE - B - 2 605 619
GB - A - 1 269 089
GB - A - 1 437 393

Lehrbuch der Fernmeldetechnik, K. Bergmann, 1978,
Schiele & Schön, Berlin, S. 773-781

(73) Patentinhaber: Siemens Aktiengesellschaft, Berlin und
München Wittelsbacherplatz 2, D-8000 München 2 (DE)

(72) Erfinder: Günther, Rudolf, Dipl.-Ing., Ackerweg 25,
D-3300 Braunschweig (DE)

## Beschreibung

Die Erfindung bezieht sich auf eine Einrichtung nach dem Oberbegriff des Patentanspruches 1.

Von einer Datenquelle an einem ersten Ort seriell an einen zweiten Ort zu übertragende Datenwörter, die dort parallel einer Datensenke zugeführt werden sollen, müssen eine Serien/Parallel-Wandlung erfahren. Hierzu sind bei Einrichtungen der eingangs genannten Gattung Schieberegister gebräuchlich (Taschenbuch der Nachrichtenverarbeitung, K. Steinbuch, 2. Auflage, 1967, Kapitel 4.3).

Handelsübliche Schieberegister sind jedoch in ihrer Arbeitsweise nicht so sicher, daß sie in sicherungstechnischen Datenübertragungseinrichtungen, beispielsweise des Eisenbahnwesens, ohne weiteres eingesetzt werden können. Es muß daher mit dem Auftreten von Bauteilefehlern gerechnet werden.

Zum Erkennen von Übertragungsfehlern auf dem Weg von einer Quelle zu einer Senke ist es bekannt, das jeweils übermittelte Datenwort vor seiner Freigabe an den Prozeß zur Datenquelle zurückzuübertragen und dort mit dem ausgesandten Datenwort zu vergleichen. Nur wenn beide Datenwörter übereinstimmen, wird die Freigabe des zuvor an die Datensenke übermittelten zwischengespeicherten Datenwortes veranlaßt (»Lehrbuch der Fernmeldetechnik« von Bergmann, Verlag Schiele & Schön GmbH, 1978, S. 779).

Um die Anzahl der je Zeiteinheit übermittelbaren Datenworte zu steigern, ist es auch bekannt (GB-P 1 437 393), den zu übertragenden Datenworten Kennungen in Form laufender Numerierungen beizugeben und nach der Übertragung eines ersten Datenwortes bereits mit der Übertragung eines zweiten Datenwortes zu beginnen, bevor die Rückübertragung des ersten Datenwortes abgeschlossen ist. Wird nach erfolgter Rückübertragung des ersten Datenwortes durch Vergleich mit dem zwischengespeicherten ursprünglichen Datenwort festgestellt, daß das erste Datenwort auf dem Weg von der Datenquelle zur Senke oder umgekehrt verfälscht worden ist, dann wird im Anschluß an das zweite Datenwort erneut das erste Datenwort übertragen. Aus der dabei mitübertragenen Kennung erkennt der Datenempfänger, daß es sich bei den ihm übermittelten Daten um eine Wiederholung eines offensichtlich fehlerbehaftet empfangenen Datenblockes handelt; er veranlaßt daraufhin die Löschung der als fehlerbehaftet gekennzeichneten Daten. Auch die erneut übertragenen Daten werden durch Rückübertragung in der sendenden Station auf eventuelle Fehler überprüft.

Ferner ist es bekannt (DE-A 2 547 178), zusätzlich zu den jeweils übermittelten Daten auch ein an die jeweilige Senke übertragenes festes Kontrollwort — die Adresse der betreffenden Senke — an die Quelle zurückzuübertragen und dort mit der jeweils ausgesandten Adresse zu vergleichen; hierdurch sollen Adressierungsfehler erkennbar gemacht werden. Dadurch, daß das jeweilige Kontrollwort und das jeweils zu übertragende Datenwort getrennt voneinander hin- und herübertragen werden, ist ein direkter Bezug zwischen adressierter Senke und durch das Datenwort tatsächlich angesprochener Senke jedoch nicht gegeben.

Alle vorgenannten Verfahren zum gesicherten Austausch von Daten in Informationsverarbeitungseinrichtungen gehen von der Annahme aus, daß die für die Rückübertragung der übermittelten Datenworte und ggf. der Kontrollworte in den Senken vorhandenen, als Parallel/Serien-Umsetzer geschalteten Schieberegister ordnungsgerecht arbeiten. Zwar machen sich Bauteilefehler, wie z. B. ein defektes Gatter im Schiebezweig eines Registers, in den meisten Fällen durch Verfälschung der Rückmeldedaten (Datenwort und/oder Kontrollwort) bemerkbar; es kann jedoch auch der Fall eintreten, daß ein von einer Senke empfangenes, beispielsweise infolge einer Übertragungsstörung fehlerbehaftetes Datenwort im Parallel/Serien-Umsetzer infolge eines Bauteiledefektes seinerseits gerade so verfälscht wird, daß das an die Quelle rückübertragene Datenwort dem von dort ausgesandten Datenwort entspricht. Es wird dann in der Senke ein Datenwort freigegeben, das tatsächlich nicht übereinstimmt mit dem ausgesandten Datenwort.

Aufgabe der Erfindung ist es, eine Einrichtung der im Oberbegriff des Patentanspruches angegebenen Gattung so auszubilden, daß Fehler im Datenfluß sicher erkannt werden. Insbesondere sollen solche Übertragungsfehler, die ihre Ursache in einem Defekt des für die Rückübertragung der Daten- und Kontrollworte an eine Quelle verwendeten Parallel/Serien-Umsetzers haben und die in ihrer Wirkung andere Übertragungsfehler kompensieren könnten, sicher erkannt werden.

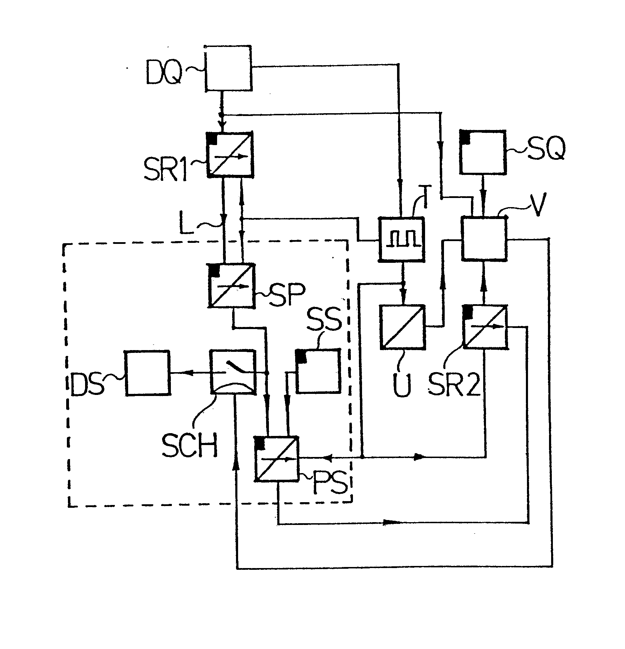

Ein Ausführungsbeispiel der Erfindung ist in der Zeichnung dargestellt und wird nachfolgend näher erläutert.

Die Darstellung zeigt eine einem durch gestrichelte Linien angedeuteten ersten Ort zugeordnete Datensenke DS, die über eine Schaltstufe SCH mit in einem als Schieberegister ausgebildeten Serien-Parallel-Umsetzer SP parallel anliegenden Datenwörtern versorgt werden kann. Dem Serien-Parallel-Umsetzer SP werden die von einer Datenquelle DQ parallel generierten Datenwörter über ein Schieberegister SR1 und eine Leitung L zugeführt. Ein Taktgenerator T löst gesteuert durch die Datenquelle DQ jeweils beim Vorliegen eines Datenwortes eine dessen Stellenzahl entsprechende Anzahl von Takten für das Schieberegister SR1 und den Serien-Parallel-Umsetzer SP aus.

Die Datenquelle DQ und alle anderen nicht dem ersten Ort zugeordneten Schaltungselemente sind einem zweiten Ort zugeordnet. Die Datenquelle DQ und die ihr örtlich zugeordneten Schaltungselemente können dabei in der Übersichtlichkeit halber nicht dargestellter Weise mit an weiteren Orten vorgesehenen Datensenken in Verbindung stehen.

Die vom Serien-Parallel-Umsetzer SP erzeugten parallelen Datenwörter werden einem ebenfalls als Schieberegister ausgebildeten Parallel-Serien-Umsetzer PS zusammen mit einem in einem senkeseitigen Speicher SS gespeicherten Kontrollwort zugeführt.

Gesteuert durch den Taktgeber T wird jedes Datenwort und jeweils unmittelbar im Anschluß an dieses das Kontrollwort in ein Schieberegister SR2 eingelesen, indem jeweils nach der durch den Serien-Parallel-Umsetzer SP vorgenommenen Wandlung eines Datenwortes eine Anzahl von Takten an den Parallel-Serien-Umsetzer PS und das Schieberegister SR2 geleitet wird, die der summierten Stellenzahl eines Datenwortes und des Kontrollwortes entspricht. Ferner wird über den Taktgeber T und einen Umsetzer U unmittelbar darauf folgend ein sicherer Vergleicher V wirksamgeschaltet. Typisch für diesen ist es, daß auftretende Defekte sich stets so auswirken, daß Ungleichheit signalisiert wird. Der Vergleicher V vergleicht den Inhalt des Schieberegisters SR2 mit dem auch in einem quellenseitigen Speicher SQ gespeicherten Kontrollwort und dem jeweiligen Datenwort der Datenquelle DQ.

Sofern das anstehende und das vorgegebene Kontrollwort sowie das Datenwort der Datenquelle DQ und das im Schieberegister SR2 vorliegende Datenwort übereinstimmen, wird durch die Vergleichseinrichtung V die Schaltstufe SCH geschaltet, so daß nunmehr das im Serien-Parallel-Umsetzer SP gespeicherte Datenwort der Datensenke DS zugeführt werden kann.

## Patentanspruch

1. Einrichtung zum Erkennen von Übertragungsfehlern bei der Datenübertragung von einer Datenquelle zu einer Datensenke mit serieller, taktgesteuerter Übertragung variabler Datenwörter vorgegebener Länge und ebenfalls taktgesteuerter paralleler Datenverarbeitung in der Quelle und der Senke sowie Rückübertragung eines festen Kontrollwortes und des jeweils übermittelten Datenwortes an die Quelle zum Vergleich mit einem Kennzeichen für die Senke und mit dem ausgesandten Datenwort, wobei bei Übereinstimmung zwischen beiden das jeweils an die Datensenke übermittelte Datenwort von der Datenquelle her freizugeben ist, dadurch gekennzeichnet, daß den Parallel-Eingängen eines am Ort der Datensenke vorgesehenen Parallel/Serien-Umsetzers (PS) das jeweils übermittelte Datenwort (über SP) und das feste Kontrollwort (über SS) in der Weise zuführbar ist, daß beim Auslesen des Umsetzers zum Zweck der Rückübertragung von Daten- und Kontrollwort das Kontrollwort unmittelbar anschließend an das Datenwort die zuvor von diesem belegten Speicherplätze des Umsetzers (PS) durchläuft und daß am Ort der Datenquelle ein sicherer (fail-safe) Vergleicher (V) vorgesehen ist, der jeweils nach einer Anzahl von Takten ab Serien/Parallel-Wandlung (in SP), die der summierten Stellenzahl jeweils eines Daten- und eines Kontrollwortes entspricht, wirksam schaltbar ist (über U).

## Claim

1. A device for the recognition of transmission errors in data transmission from a data source to a data sink, with serial clock-pulse-controlled transmission of variable data words of predetermined length and with likewise clock-pulse-controlled parallel data processing in the source and in the sink, and with retransmission of a fixed check word and of the transmitted data word to the source for comparison with a characteristic of the sink and with the transmitted data word, where in the event of identity between these two the data word which has been transmitted to the data sink is to be released by the data source, characterised in that the parallel-inputs of a parallel/series converter (PS) arranged at the location of the data sink can be supplied with the transmitted data word (via SP) and with the fixed check word (via SS) in such manner that on the read-out of the converter for the retransmission of data word and check word the check word passes through those storage positions of the converter (PS) which have previously been occupied by the data word immediately following the data word and that at the location of the data source there is provided a fail-safe comparator (V) which can be actuated (via U) following a number of clock pulses after the series/parallel conversion (in SP), which number corresponds to the summed number of digits of a data word and a check word.

## Revendication

1. Dispositif pour reconnaître des erreurs de transmission lors de la transmission de données d'une source de données à un drain de données avec transmission, sérielle et cadencée, de mots de données variables de longueur prédéterminée et également de traitement de données, parallèle et également cadencé, dans la source et le drain, ainsi que la transmission en retour à la source d'un mot de contrôle fixe et du mot de données à transmettre en vue de la comparaison avec une caractéristique pour le drain et avec le mot de données émis, étant noté que s'il y a concordance entre les deux, le mot de données transmis au drain de données doit être libéré par la source de données, caractérisé par le fait qu'aux entrées parallèles d'un convertisseur parallèle/série (PS) prévu à l'emplacement du drain de données sont applicables le mot de données transmis (par SP) et le mot de contrôle fixe de manière qu'à la lecture du convertisseur, en vue de la transmission en retour du mot de données et du mot de contrôle, le mot de contrôle traverse, immédiatement après le mot de données, les emplacements de mémoire du convertisseur, occupés précédemment par ce dernier mot, et qu'à l'emplacement de la source des données est prévu un comparateur sûr (V) (fail-safe) qui, après un nombre de cadences, à partir de la conversion série/parallèle (dans SP), et qui correspond à la somme du nombre de chiffres d'un mot de données et d'un mot de contrôle, est susceptible d'être commandé dans son état actif de fonctionnement (par Ü).